# EUROPÄISCHE PATENTSCHRIFT

(11) **EP 3 153 255 B1**
(45) Veröffentlichungstag und Bekanntmachung des Hinweises auf die Patenterteilung: **21.08.2019**
(21) Anmeldenummer: 16002130.9
(22) Anmeldetag: 04.10.2016
(51) Int. Cl.: B64C 13/34, B33Y 80/00, B22F 3/105, F16H 57/032, B22F 7/06, B22F 5/10

(54) **GEHÄUSE FÜR EIN GETRIEBE UND VERWENDUNG EINES ADDITIVEN FERTIGUNGSVERFAHRENS**
HOUSING FOR A TRANSMISSION AND USE OF AN ADDITIVES PRODUCTION PROCESS
BOÎTIER DE TRANSMISSION ET UTILISATION D'UN PROCÉDÉ DE FABRICATION ADDITIVE

(30) Priorität: 10.10.2015 DE 102015013182
(43) Veröffentlichungstag der Anmeldung: 12.04.2017
(73) Patentinhaber: Diehl Defence GmbH & Co. KG, 88662 ÜBERLINGEN (DE)
(72) Erfinder: Fisch, Peter Gerd, 88662 Überlingen (DE); Elsner, Gerd, 88690 Oberuhldingen (DE); Stengele, Alexander, 78333 Stockach (DE); Fischer, Klaus, 78355 Hohenfels (DE)
(74) Vertreter: Diehl Patentabteilung

(56) Entgegenhaltungen:
- WO-A1-2016/111896
- DE-A1-102014 003 441
- FR-A1- 3 016 407
- GB-A- 2 521 391

## Beschreibung

Die Erfindung betrifft ein Gehäuse für ein Getriebe. Das Gehäuse dient zur Aufnahme des Getriebes, insbesondere von Zahnrädern und Wellen. Die Erfindung betrifft ein Gehäuse mit einem darin aufgenommenen Getriebe.

Bei derartigen Gehäusen ist es in der Praxis üblich, verschiedene Abschnitte bzw. Teile des entsprechenden Gehäuses aus verschiedenen Materialien zu fertigen. Beispielsweise wird ein Teil des Gehäuses aus Stahl und ein anderer Teil des Gehäuses aus Aluminium gefertigt. Derartige Getriebe können bei tiefen Temperaturen, beispielsweise bei -40°C, stark erhöhte Reibmomente zeigen.

Aus dem Stand der Technik ist es bekannt, additive Fertigungsverfahren zur Herstellung diverser Komponenten einzusetzen. Die FR 3 016 407 A1 beschreibt ein Nebenaggregatgetriebe für ein Turbotriebwerk, welches zwei Arme aufweist, in welchen Getriebelinien montiert sind. Das Gehäuse des Nebenaggregatgetriebes kann mittels additiver Fertigung wie Laserstrahlschmelzen hergestellt sein. Die GB 2 521 391 A beschäftigt sich mit Komponenten, welche Teil eines Lagers, eines Stellantriebs, eines Zahnrades, eines Getriebegehäuses etc. sein können. In die mittels eines additiven Fertigungsverfahrens hergestellten Komponenten wird eine Kennmarke eingebettet, um diese von Fälschungen unterscheiden zu können. Die WO 2016/111896 A1 beschäftigt sich mit einer zumindest teilweise mit einem additiven Fertigungsverfahren hergestellten Struktur, in welcher ein Vibrationsdämpfer eingebettet ist. Es wird vorgeschlagen, die Struktur für Teile eines Helikopters, wie Getriebe, Gehäuse usw. einzusetzen.

Aufgabe der Erfindung ist es, ein verbessertes Gehäuse anzugeben.

Die Aufgabe wird gelöst durch ein Gehäuse gemäß Patentanspruch 1. Bevorzugte oder vorteilhafte Ausführungsformen der Erfindung sowie andere Erfindungskategorien ergeben sich aus den weiteren Ansprüchen, der nachfolgenden Beschreibung sowie den beigefügten Figuren.

Das Gehäuse ist ein Gehäuse für ein Getriebe. Das Gehäuse dient zur Aufnahme des Getriebes bzw. nimmt das Getriebe auf. Zumindest ein Abschnitt des Gehäuses ist mit Hilfe eines additiven Fertigungsverfahrens hergestellt. Entsprechend der Erfindung ist ein Abschnitt, der zumindest teilweise an das Getriebe oder eines Teils des Getriebes angrenzt, mit Hilfe eines additiven Fertigungsverfahrens hergestellt.

Im Rahmen der vorliegenden Patentanmeldung steht der Begriff "additives Fertigungsverfahren" für Fertigungsverfahren, für welche in der Literatur eine Vielzahl von Bezeichnungen üblich sind. Derartige Fertigungsverfahren werden z.B. auch "generative Fertigungsverfahren", "additive manufacturing", "rapid prototyping", "rapid manufacturing" oder "3D-Druck" genannt. Eine Übersicht über Beispiele additiver Fertigungsverfahren findet sich beispielsweise in dem Dokument "'VDI Statusreport Additive Fertigungsverfahren September 2014', Verein deutscher Ingenieure e.V., Dr. Erik Marquardt, Fachbereich Produktionstechnik und Fertigungsverfahren, PDF-Datei zum kostenlosen Download unter www.vdi.de/statusadditiv".

Durch Einsatz des additiven Fertigungsverfahrens können Strukturen, insbesondere Materialstärken beziehungsweise Wanddicken am Gehäuse realisiert werden, welche in dieser Ausführung bzw. Anordnung mit herkömmlichen Fertigungsverfahren nur äußerst aufwändig oder gar nicht herstellbar wären. So ist es insbesondere möglich, ein Gehäuse herzustellen, welches an jeder Stelle nur die entsprechende Materialstärke aufweist, welche notwendig ist, um gerade den dort zu erwartenden Belastungen standhalten zu können. So entstehen Abschnitte mit sehr geringen Wanddicken, so dass sich eine Gewichtseinsparung gegenüber herkömmlich gefertigten Gehäusen ergibt.

Für die Auswahl des Gehäusematerials steht eine Reihe von Materialien zur Verfügung, welche mit additiven Fertigungsverfahren bearbeitbar sind. So kann insbesondere ein Material gewählt werden, welches bezüglich seiner Wärmeausdehnung für das einzusetzende Getriebe günstig ist, um Schwergängigkeit, erhöhte Reibung oder gar Verklemmungen beziehungsweise ungünstige Toleranzlagen über den gesamten spezifizierten Temperaturbereich zu verringern oder zu vermeiden.

Das Gehäuse ist ein Gehäuse einer Rudermaschine für ein Leitwerk eines Fluggerätes. Die Rudermaschine enthält dabei das Getriebe. Das Fluggerät ist insbesondere ein Flugzeug, eine Flugwaffe oder ein Lenkflugkörper. Bei derartigen Gehäusen sind die oben genannten Vorteile, wie z.B. Leichtbaumöglichkeit, wegen der erzielbaren Gewichtsersparnis besonders vorteilhaft.

Gemäß der Erfindung ist zumindest ein Abschnitt des Gehäuses, insbesondere das gesamte Gehäuse, aus einem Stahlwerkstoff gefertigt. Auch das Getriebe, insbesondere dessen Teile, wie Wellen und Zahnräder, ist entsprechend der Erfindung aus einem Stahlwerkstoff gefertigt.

Die Erfindung beruht auf folgenden Überlegungen und Erkenntnissen: Aus der Praxis sind leichtbauende Getriebe, insbesondere Rudermaschinen, bekannt, welche meistens ein Gehäuse aus Aluminium aufweisen. Das eigentliche Getriebe bzw. die eigentlichen Getriebeelemente, wie etwa Zahnräder und Wellen, sind üblicherweise hoch belastet und aus Stahl hergestellt. Bei Temperaturgang kommt es aufgrund der unterschiedlichen Ausdehnungen zu Verklemmungen im Getriebe. Grund für die erhöhten Reibmomente im bekannten Gehäuse beziehungsweise dem bekannten Getriebe bzw. Rudermaschine sind die unterschiedlichen Werkstoffpaarungen von Gehäuse und Getriebe. Das Getriebe ist in der Regel aus Stahl gefertigt, um das Getriebe beziehungsweise die Zahnräder für die auftretenden hohen Belastungen auszulegen. Ein üblicher Temperaturbereich für die Gehäusespezifikation bei Rudermaschinen ist z.B. -55°C bis +80°C. Diejenigen Gehäuseteile, die nicht aus Stahl sondern z.B. aus Aluminium bestehen, weisen andere Wärmeausdehnungen auf. Dies führt im üblichen Temperaturbereich für die Gehäusespezifikation zu erhöhter Reibung oder Verklemmungen. Wünschenswert ist es, die Reibmomente über einen weiten Temperaturbereich, insbesondere den oben genannten Spezifikationsbereich, weitgehend konstant zu halten.

Eine erste denkbare Lösung wäre der Einbau einer Heizung, um die Nachteile bei tiefen Temperaturen dadurch zu vermeiden, dass das Getriebe, insbesondere die Rudermaschine auf unkritische Temperaturen stabilisiert wird. Weiterhin wäre eine mögliche Lösung, das Gehäuse beziehungsweise das Getriebe aus Werkstoffen zumindest ähnlicher Wärmeausdehnung aufzubauen. Eine Möglichkeit wäre beispielsweise, das Gehäuse aus einer teuren Titanlegierung zu fertigen, was jedoch einen Kostennachteil bedeuten würde.

Die Verwendung von Stahlwerkstoff scheidet insbesondere in der Luftfahrt in der Regel aus, da das Gewicht eines entsprechenden Getriebes zu hoch wird. Die erfinderische Idee besteht nun darin, ein additives Fertigungsverfahren in Verbindung mit einem Stahlwerkstoff einzusetzen. So kann der Stahlwerkstoff dünner als bisher möglich eingesetzt werden und so die dem Stahlwerkstoff eigene Gewichtsproblematik zumindest in ausreichendem Maße kompensiert werden. So können auch das gesamte Gehäuse oder entsprechend kritische Gehäuseabschnitte, insbesondere Abschnitte die zumindest teilweise an das Getriebe oder an Teile davon angrenzen, aus Stahlwerkstoff gefertigt werden. Hierbei können, wie oben erwähnt, Materialstärken gefertigt werden, die insgesamt zu einem Leichtbau-Stahlgehäuse führen, welches keine oder nur akzeptable Gewichtsnachteile mehr gegenüber einem bisherigen Gehäuse in Hybridbauweise, insbesondere aus Stahl und Aluminium, aufweist.

Das Stahlgehäuse weist dann die identische Wärmeausdehnung wie ein Stahlgetriebe bzw. dessen Zahnräder auf, wodurch unterschiedliche Materialausdehnungen verhindert werden. Gemäß dieser Erfindungsvariante entsteht ein Gehäuse geringerer Komplexität und mit geringeren Kosten gegenüber bisherigen Ansätzen. Das Gehäuse kann leichtbauend ausgeführt werden. Es kann eine Zusammenfassung von üblichen Aluminium- und Stahlgehäusebauteilen zu einem monolithischen Stahlgehäuse erfolgen. Ein mehrteiliges Getriebe- bzw. Rudermaschinengehäuse, welches bisher aus gemischten Werkstoffen gefertigt wurde, kann nun als einteiliges Gehäuse ausgeführt werden, wobei gleichzeitig die Gefahr von Temperaturspannungen gebannt wird. Mit anderen Worten wird das Gehäuse also mit Verfahren der additiven Fertigung aufgebaut.

Mit den erfindungsgemäßen additiven Fertigungsverfahren, welche neuesten Fertigungsmethoden entsprechen, können Getriebe- bzw. Rudermaschinengehäuse aus Stahl gleichen Gewichts und gleicher Steifigkeit wie bisherige Gehäuse aus Aluminium oder mit Aluminiumanteil hergestellt werden. Gemäß dieser Erfindungsvariante ist also ein temperaturspannungsfreies Leichtbaugehäuse realisierbar. Ein Aluminium- oder Hybridgehäuse, welches bisher üblich ist, kann aufgrund der neuartigen additiven Fertigungstechnologie durch ein gleich schweres und gleich steifes Stahlgehäuse realisiert werden. Sämtliche gestalterischen Freiheitsgrade additiver Fertigungsverfahren, zum Beispiel insbesondere des SLM-Verfahrens (selective laser melting), auch LBM (laser beam melting) genannt, können genutzt werden.

Gemäß einer bevorzugten Ausführungsform umfasst das Gehäuse mehrere Gehäuseteile. Mindestens eines der Gehäuseteile ist mit Hilfe des additiven Fertigungsverfahrens hergestellt. So können beispielsweise unkritische konventionell zu fertigende Gehäuseteile mit herkömmlichen Fertigungsverfahren schnell und einfach hergestellt werden, komplexe oder besonders gewichtssparend auszuführende Gehäuseteile können mit Hilfe des additiven Fertigungsverfahrens hergestellt werden. So werden Kosten und Aufwand für das gesamte Gehäuse gesenkt.

In einer alternativen Ausführungsform ist das Gehäuse einstückig ausgeführt. Das einstückige Gehäuse kann vollständig mit Hilfe eines additiven Fertigungsverfahrens hergestellt werden. Es ist aber auch möglich, mit additiven Fertigungsverfahren nur bestimmte Abschnitte des Gehäuses, insbesondere solche Abschnitte, die zumindest teilweise an das Getriebe angrenzen, zu fertigen und die restlichen Abschnitte herkömmlich herzustellen. Schlussendlich werden alle Abschnitte des Gehäuses dann einstückig verbunden, zum Beispiel verschweißt.

In einer bevorzugten Ausführungsform ist das Gehäuse vollständig mit Hilfe des additiven Fertigungsverfahrens hergestellt. Dies gilt sowohl für ein einstückiges Gehäuse als auch für ein Gehäuse mit mehreren Gehäuseteilen. Insbesondere ist so nur ein einziges Fertigungsverfahren für das gesamte Gehäuse notwendig und das gesamte Gehäuse kann insbesondere bezüglich Wandstärken an allen Stellen mit geringstmöglicher Wandstärke bzw. gewichtssparender Struktur ausgeführt werden.

In einer bevorzugten Ausführungsform weist zumindest ein Teil desjenigen Abschnitts des Gehäuses, welcher mit Hilfe des additiven Fertigungsverfahrens hergestellt ist, eine Mikrostruktur auf. Die Mikrostruktur - z.B. als o.g. gewichtssparende Struktur - enthält eine Vielzahl von Verbindungsstegen mit dazwischenliegenden Freiräumen. Der entsprechende Gehäuseabschnitt ist insbesondere als Mikrofachwerk ausgeführt, wie es zum Beispiel aus der DE 10 2014 003 441 A1 bekannt ist. Eine derartige Mikrostruktur ist trotz ihrer Freiräume ausreichend stabil im Vergleich zu einem aus Vollmaterial hergestellten Gehäuseabschnitt, jedoch gewichtssparender. Insbesondere derartige Mikrostrukturen sind mit herkömmlichen Fertigungsverfahren nicht oder nur schwer herstellbar, durch das additive Fertigungsverfahren jedoch problemlos herstellbar.

In einer bevorzugten Ausführungsform ist das additive Fertigungsverfahren ein SLM- oder LBM-Verfahren. Diese Verfahren wurden bereits oben genannt und eignen sich insbesondere zur Verarbeitung von Stahlwerkstoffen und somit zur Herstellung von additiv gefertigten Stahlgehäusen mit den o.g. Vorteilen.

In einer bevorzugten Ausführungsform ist das Gehäuse bionisch bzw. nach einem bionischen Ansatz konstruiert. Ein entsprechend bionischer Ansatz schafft in der Regel filigrane beziehungsweise organisch anmutende Strukturen, welche insbesondere als Mikrofachwerk, wie oben erläutert, ausgeführt werden können und eine Vielzahl von Hohlräumen zwischen Verbindungsstegen aufweisen. Beim bionischen Ansatz werden insbesondere in der Natur vorkommende Strukturen imitiert oder nachgeahmt, welche beispielsweise besonders stabil und zugleich auch besonders leicht sein können.

Gemäß einer bevorzugten Variante dieser Ausführungsform ist das Gehäuse unter Verwendung mindestens zweier Topologieoptimierungen, insbesondere automatischer bionischer Optimierungsläufe mit unterschiedlichen Startparametern, konstruiert. Durch die beiden verschiedenen Optimierungsläufe werden in der Regel zwei verschiedene Gehäusestrukturen vorgeschlagen. Diese dienen dann als Anregungen für einen Konstrukteur, um ein gewichtssparendes, aber ausreichend stabiles Gehäuse - in der Regel als CAD-Modell - zu entwerfen.

Die Aufgabe der Erfindung wird auch gelöst durch die Verwendung eines additiven Fertigungsverfahrens gemäß Patentanspruch 10. Das additive Fertigungsverfahren wird hierbei zur Herstellung des oben genannten erfindungsgemäßen Gehäuses verwendet. Die Verwendung sowie deren bevorzugte Ausführungsformen und deren Vorteile wurden sinngemäß bereits im Zusammenhang mit dem erfindungsgemäßen Gehäuse erläutert.

Die Aspekte der Erfindung in ihren verschiedenen Kategorien einschließlich bevorzugter Ausführungsformen lassen sich wie folgt zusammenfassen:
Die erfindungsgemäßen Gehäuse können vollständig neu entworfen werden; alternativ ist es aber auch möglich, bekannte Gehäuseentwürfe bzw. -designs im Hinblick auf die Möglichkeiten der additiven Fertigungsverfahren zu optimieren, insbesondere Wandstärken an bestimmten Gehäuseabschnitten zu reduzieren und/oder bisherige massive Abschnitte als Mikrofachwerk auszuführen usw. Die Änderungen können insbesondere dort vorgenommen werden, wo dies bisher aufgrund der begrenzten Möglichkeiten herkömmlicher Fertigungsmethoden nicht möglich oder nicht wirtschaftlich war. Insbesondere können mit dem erfindungsgemäßen Gehäuse zukünftige Fluggeräteprojekte realisiert werden oder auch Upgrade-Programme existierender Baureihen durchgeführt werden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
- Fig. 1: ein erfindungsgemäßes Gehäuse und dessen Entwurf anhand eines bestehenden Gehäuses,
- Fig. 2: einen alternativen Entwurfsprozess für das erfindungsgemäße Gehäuse,
- Fig. 3: die Übertragung des bestehenden Gehäuses aus Fig. 1 in ein herkömmliches Stahlgehäuse.

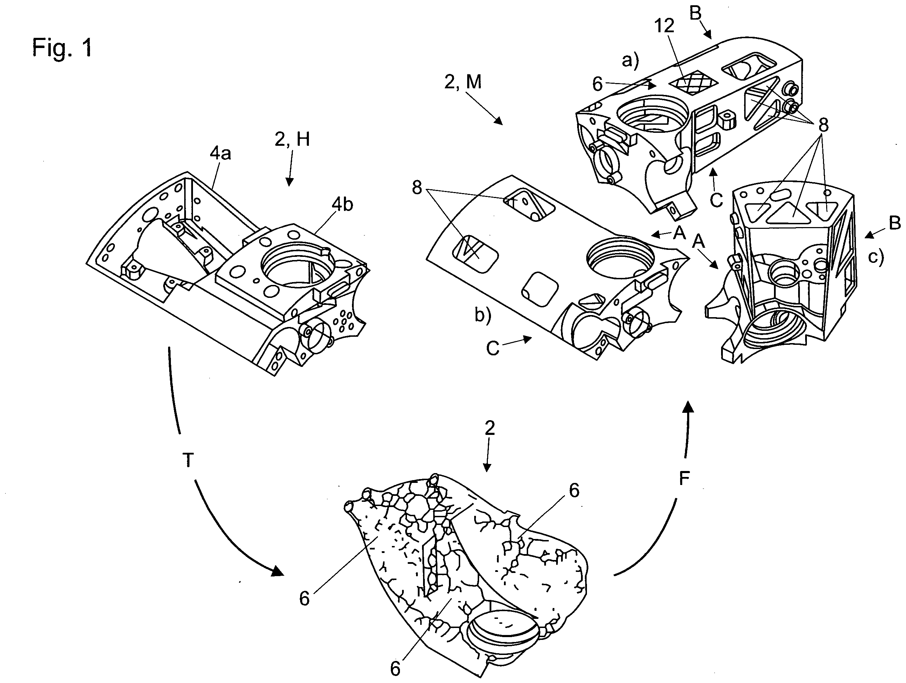

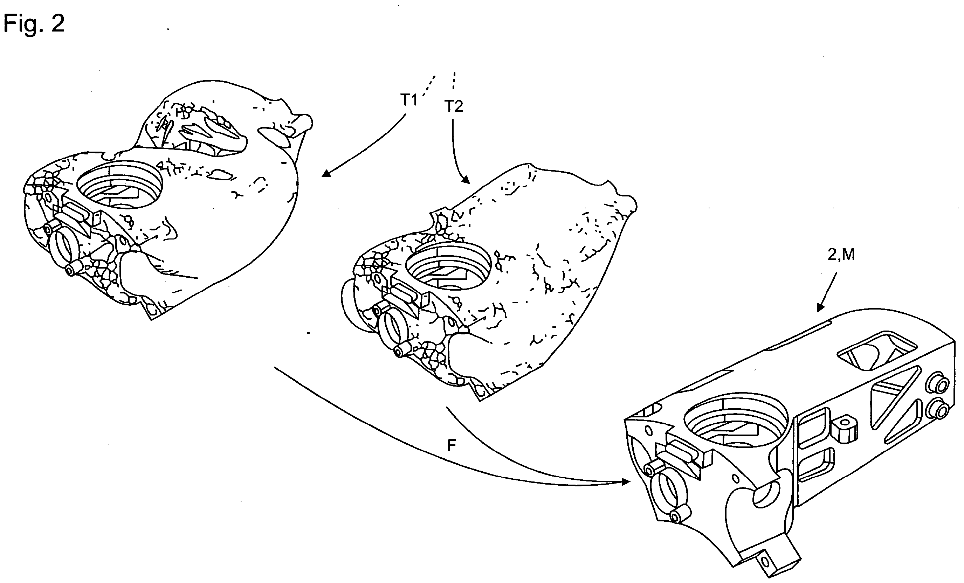

Figur 1 zeigt ein Gehäuse 2 gemäß der Erfindung, das ein Gehäuse 2 einer Rudermaschine für ein Leitwerk eines Fluggerätes - alle nicht dargestellt - ist. Das Gehäuse 2 dient zur Aufnahme eines in den Figuren 1 und 2 nicht dargestellten Getriebes 10 der Rudermaschine. Das Gehäuse 2 ist in seiner Gesamtheit einstückig mit Hilfe eines additiven Fertigungsverfahrens, hier des SLM-Verfahrens, hergestellt.

Figur 1 zeigt das Gehäuse 2 aus drei Ansichten a) bis c), wobei die jeweiligen Blickrichtungen für die Ansichten durch Pfeile und Großbuchstaben A-C dargestellt sind. Figur 1 zeigt auch einen Entwurfsprozess, welcher zur konkreten Ausführung des Gehäuses 2 führt. Der Entwurfsprozess beginnt bei einem bereits vorliegenden Entwurf für das Gehäuse 2 als Hybridbauteil H, bei dem ein erstes Gehäuseteil 4a des Gehäuses, hier ein Grundkörper bzw. eigentliches Gehäuse, aus Aluminium gefertigt ist. Ein zweites Gehäuseteil 4b, hier eine besonders belastete obere Abdeckung, ist aus Stahl gefertigt. Das bestehende Bauteil weist eine Masse von 430 Gramm auf und eine Verformung am Lagersitz von 0,09 Millimeter.

Das Problem des Gehäuses 2 als Hybridbauteil H, also in Hybridbauweise, besteht hier in der unterschiedlichen Wärmeausdehnung der Gehäuseteile 4a, b. Diese verursachen stark temperaturabhängige Veränderungen von Reibung beziehungsweise Getriebespiel in der endgültigen Rudermaschine, das heißt wenn das Getriebe 10 in das Gehäuse 2 eingesetzt ist. Das Gesamtgewicht von 430 Gramm setzt sich hierbei aus 140 Gramm für das Gehäuseteil 4b und 281 Gramm für das Gehäuseteil 4a sowie 9 Gramm für nicht dargestellte Gehäuseschrauben zusammen.

Über eine Topologieoptimierung T erfolgt zunächst eine automatische Ermittlung hochbelasteter und weniger belasteter Abschnitte 6 des Gehäuses 2 anhand in der Fachwelt üblicher CAD-Methoden (Computer Aided Design), die hier nicht näher erläutert werden sollen.

In einer anschließenden Fertigungsoptimierung F wird das Ergebnis der Topologieoptimierung ausgewertet bzw. genutzt. Vorliegend werden z.B. in weniger belasteten Abschnitten 6 des Gehäuses 2 Aussparungen 8 in das Design des Gehäuses 2 vorgesehen. Hierdurch wird Material eingespart. Die entstehende komplexe Bauteilgeometrie (CAD-Design) kann anhand des additiven Fertigungsverfahrens aus Stahl problemlos gefertigt werden. Im Ergebnis ergibt sich das Monolithbauteil M als Gehäuse 2, welches alleine aus Stahl besteht und eine Masse von ca. 480 Gramm bei einer Verformung des Lagersitzes von ebenfalls 0,09 Millimeter aufweist.

Für das Gehäuse 2 in Monolithbauweise, also als Monolithbauteil M, ergibt sich ein homogenes Wärmeausdehnungsverhalten der Gehäusestruktur, keine nachteiligen Veränderungen bezüglich Steifigkeit und Gewicht gegenüber dem Hybridbauteil H, eine verbesserte Montierbarkeit und die Möglichkeit der Nutzung der gestalterischen Freiheitsgrade des additiven Fertigungsverfahrens, hier insbesondere des SLM-Verfahrens.

Figur 1 zeigt optional, wie die Masse des Gehäuses 2 durch Fertigung einer Mikrostruktur 12 weiter reduziert werden kann. Die Mikrostruktur weist symbolisch angedeutete Stege und Zwischenräume auf, ist jedoch im entsprechenden Abschnitt 6 des Gehäuses 2 ausreichend stabil.

Figur 2 zeigt eine alternative Optimierung des Gehäuses 2 zur Monolithbauweise M hin im Detail. Ausgehend von dem bekannten Gehäuse 2 aus Fig. 1 in Hybridbauweise werden zwei unterschiedliche Topologieoptimierungen T mit unterschiedlichen Startparametern als zwei automatische bionische Optimierungsläufe getätigt. Aus beiden Ergebnissen erfolgt die Fertigungsoptimierung F, bei der anhand der automatisch bionisch optimierten Zwischenmodelle (unterschiedliche Ergebnisse der beiden verschiedenen Topologieoptimierungen T) eine endgültige Ausgestaltung (CAD-Modell) der Form des Gehäuses 2 geschaffen wird. Die erzielte Masse des Monolithbauteils M liegt bei 484 Gramm, also noch ca. 50 Gramm über dem der Hybridversion H.

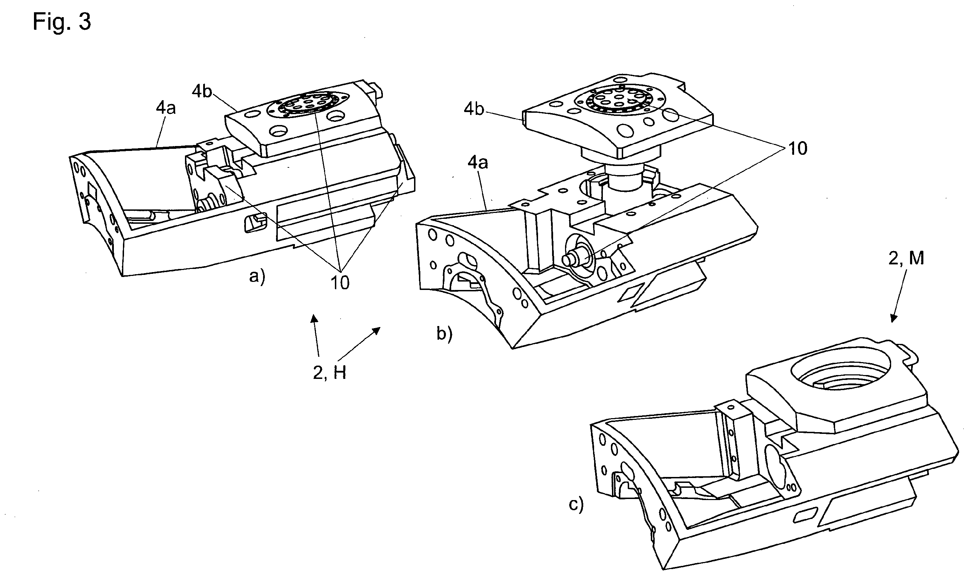

Figur 3 zeigt für das Gehäuse 2 den Übergang des Hybridbauteils H zu einem alternativen Monolithbauteil M gemäß Stand der Technik. In das Gehäuse 2 gemäß Figuren 3a, b sind Teile des Getriebes 10, d.h. einige Getriebekomponenten, eingesetzt. Figur 3a zeigt eine Montageposition und Figur 3b eine teilweise Explosionsdarstellung. Figur 3 zeigt das Gehäuse 2 auch in Monolithbauweise M bei Verwendung herkömmlicher Fertigungstechnologie. hierzu wurde das Design gemäß Figur 3a, b identisch in reine Stahlbauweise übernommen. Die Masse des Gehäuses 2 gemäß Figur 3c liegt deutlich über derjenigen der Gehäuse 2 als Monolithbauteile M gemäß Figuren 1 und 2, da hier insbesondere keine Topologieoptimierung T stattgefunden hat. Insbesondere sind keine Aussparungen 8 im Monolithbauteil M gemäß Fig. 3 vorhanden.

### Bezugszeichenliste

- 2: Gehäuse
- 4a, b: Gehäuseteil
- 6: Abschnitt
- 8: Aussparung
- 10: Getriebe
- 12: Mikrostruktur

- F: Fertigungsoptimierung
- H: Hybridbauteil
- M: Monolithbauteil
- T: Topologieoptimierung

## Patentansprüche

1. Gehäuse (2) einer Rudermaschine für ein Leitwerk eines Fluggerätes mit einem darin aufgenommenen Getriebe (10), wobei
a) zumindest ein Abschnitt (6) des Gehäuses (2), der zumindest teilweise an das Getriebe (10) oder eines Teils des Getriebes (10) angrenzt, mit Hilfe eines additiven Fertigungsverfahrens hergestellt ist und
b) der Abschnitt (6) und das Getriebe (10) aus einem Stahlwerkstoff gefertigt sind.

2. Gehäuse (2) nach Anspruch 1,
wobei das gesamte Gehäuse (2), aus einem Stahlwerkstoff gefertigt ist.

3. Gehäuse (2) nach Anspruch 1 oder 2,
wobei das Gehäuse (2) mehrere Gehäuseteile (4a, 4b) umfasst, und mindestens eines der Gehäuseteile (4a, 4b) mit Hilfe des additiven Fertigungsverfahrens hergestellt ist.

4. Gehäuse (2) nach Anspruch 1 oder 2,
wobei das Gehäuse (2) einstückig ausgeführt ist.

5. Gehäuse (2) nach einem der vorhergehenden Ansprüche,
wobei das Gehäuse (2) vollständig mit Hilfe des additiven Fertigungsverfahrens hergestellt ist.

6. Gehäuse (2) nach einem der vorhergehenden Ansprüche,
wobei zumindest ein Teil des mit Hilfe des additiven Fertigungsverfahrens hergestellten Abschnitts (6) des Gehäuses (2) eine Mikrostruktur (12) aufweist, die eine Vielzahl von Verbindungsstegen mit dazwischenliegenden Freiräumen enthält.

7. Gehäuse (2) nach einem der vorhergehenden Ansprüche,
wobei das additive Fertigungsverfahren ein SLM oder LBM-Verfahren ist.

8. Gehäuse (2) nach einem der vorhergehenden Ansprüche,
wobei das Gehäuse (2) nach einem bionischen Ansatz konstruiert ist.

9. Gehäuse (2) nach Anspruch 8,
wobei das Gehäuse (2) unter Verwendung mindestens zweier unterschiedlicher Topologieoptimierungen (T) konstruiert ist.

10. Verwendung eines additiven Fertigungsverfahrens,
wobei das additive Fertigungsverfahren zur Herstellung eines Gehäuses (2) nach einem der vorhergehenden Ansprüche verwendet wird.

## Claims

1. Housing (2) of a rudder mechanism for a tail unit of an aircraft having a gear mechanism (10) which is received therein,
a) at least one section (6) of the housing (2), which section (6) adjoins the gear mechanism (10) or a part of the gear mechanism (10) at least partially, being produced with the aid of an additive manufacturing method, and
b) the section (6) and the gear mechanism (10) being manufactured from a steel material.

2. Housing (2) according to Claim 1, the entire housing (2) being manufactured from a steel material.

3. Housing (2) according to Claim 1 or 2, the housing (2) comprising a plurality of housing parts (4a, 4b), and at least one of the housing parts (4a, 4b) being produced with the aid of the additive manufacturing method.

4. Housing (2) according to Claim 1 or 2, the housing (2) being configured in one piece.

5. Housing (2) according to one of the preceding claims, the housing (2) being produced completely with the aid of the additive manufacturing method.

6. Housing (2) according to one of the preceding claims, at least one part of that section (6) of the housing (2) which is produced with the aid of the additive manufacturing method having a microstructure (12) which comprises a multiplicity of connecting webs with clearances which lie in between.

7. Housing (2) according to one of the preceding claims, the additive manufacturing method being an SLM or LBM method.

8. Housing (2) according to one of the preceding claims, the housing (2) being constructed in accordance with a bionic approach.

9. Housing (2) according to Claim 8, the housing (2) being constructed with the use of at least two different topology optimizations (T).

10. Use of an additive manufacturing method, the additive manufacturing method being used to produce a housing (2) according to one of the preceding claims.

## Revendications

1. Boîtier (2) d'un mécanisme de gouverne pour un empennage d'un aéronef, comprenant un engrenage (10) accueilli dans celui-ci,
a) au moins une portion (6) du boîtier (2), qui est au moins partiellement adjacente de l'engrenage (10) ou d'une partie de l'engrenage (10), étant fabriquée à l'aide d'un procédé de fabrication additive et
b) la portion (6) et l'engrenage (10) étant fabriqués en un matériau à base d'acier.

2. Boîtier (2) selon la revendication 1, le boîtier (2) complet étant fabriqué en un matériau à base d'acier.

3. Boîtier (2) selon la revendication 1 ou 2, le boîtier (2) comportant plusieurs parties de boîtier (4a, 4b) et au moins l'une des parties de boîtier (4a, 4b) étant fabriquée à l'aide du procédé de fabrication additive.

4. Boîtier (2) selon la revendication 1 ou 2, le boîtier (2) étant réalisé d'un seul tenant.

5. Boîtier (2) selon l'une des revendications précédentes, le boîtier (2) étant entièrement fabriqué à l'aide du procédé de fabrication additive.

6. Boîtier (2) selon l'une des revendications précédentes, au moins une partie de la portion (6) du boîtier (2) qui est fabriquée à l'aide du procédé de fabrication additive possédant une microstructure (12) qui contient une pluralité de nervures de liaison entre lesquelles se trouvent des espaces libres.

7. Boîtier (2) selon l'une des revendications précédentes, le procédé de fabrication additive étant un procédé SLM (fusion sélective par laser) ou un procédé LBM (fusion par faisceau laser).

8. Boîtier (2) selon l'une des revendications précédentes, le boîtier (2) étant construit selon une approche bionique.

9. Boîtier (2) selon la revendication 8, le boîtier (2) étant construit en utilisant au moins deux optimisations de topologie (T) différentes.

10. Utilisation d'un procédé de fabrication additive, le procédé de fabrication additive étant utilisé pour la fabrication d'un boîtier (2) selon l'une des revendications précédentes.
